# EUROPÄISCHE PATENTSCHRIFT

(11) **EP 0 767 441 B1**
(45) Veröffentlichungstag und Bekanntmachung des Hinweises auf die Patenterteilung: **23.01.2002**
(21) Anmeldenummer: 96114160.3
(22) Anmeldetag: 04.09.1996
(51) Int. Cl.: G06K 7/10, G06K 7/14

(54) **Verfahren und Vorrichtung zum Lesen eines Strichkodes**
Method and device for reading a barcode
Méthode et dispositif de lecture d'un code à barres

(30) Priorität: 06.10.1995 DE 19537368
(43) Veröffentlichungstag der Anmeldung: 09.04.1997
(73) Patentinhaber: Sick AG, 79183 Waldkirch, Breisgau (DE)
(72) Erfinder: Reichenbach, Jürgen, 79312 Emmendingen (DE); Hippenmeyer, Heinrich, 79348 Freiamt (DE)
(74) Vertreter: Finsterwald, Martin, Dr.

(56) Entgegenhaltungen:
- US-A- 5 357 093
- US-A- 5 387 787

## Beschreibung

Die vorliegende Erfindung betrifft ein Verfahren und eine Vorrichtung zum Lesen eines aus einer vorgegebenen Anzahl von Codeelementen bestehenden Strichcodes, bei dem ein die Codeelemente abtastender Strichcodeleser ein binäres Signal mit aufeinanderfolgenden High-Phasen und Low-Phasen erzeugt, deren jeweilige zeitliche Längen den Breiten der aufeinanderfolgenden abgetasteten Codeelemente entsprechen.

Es sind Strichcodeleser bekannt, die eine Strichcodeabtasteinheit mit einem Lichtsender verwenden, welcher einen Lichtfleck über eine Fläche führt, auf welche ein Strichcode aus hellen und dunklen Feldern aufgedruckt ist. Das von den Codeelementen zurückgestreute Licht wird mittels eines in der Strichcodeabtasteinheit vorgesehenen Lichtempfängers empfangen und anschließend ausgewertet.

In den vorbekannten Strichcodelesern muß, damit ein auf der abgetasteten Fläche aufgebrachter Code in der Umgebung von anderen hellen und dunkleren Elementen wie Buchstaben, Bildern usw. als solcher erkannt wird, ein hinreichend breiter Bereich mit konstanter Helligkeit zumindest vor dem Code vorgesehen werden. Diese breiten, üblicherweise hellen und daher als "Weißzonen" bzw. "Weißschultern" bezeichneten Bereiche, die zur Trennung der Codeinformation von dem Umgebungsdruck dienen, sind unerwünscht, weil sie den für das Aufdrucken eines Codes benötigten Platz erhöhen, was einerseits die Informationsdichte verringert und andererseits, beispielsweise beim Aufdruck des Codes auf Konsumgüter, aus gestalterischen Gründen unerwünscht ist.

Es kann zudem vorkommen, daß ein einzelnes Umgebungsdruckelement aufgrund seiner Breite irrtümlich als Weißschulter oder als Bestandteil des Strichcodes aufgefaßt wird.

Aus der US-A-5387787 ist ein Verfahren zum Lesen von Strichcodes bekannt, dem von den jeweiligen Abtaststrahlen nur unvollständig überstrichene Strichcodes decodiert werden können. Die unvollständigen Teile werden als Strichcodefragmente erkannt und aus diesen Strichcodefragmenten wird letztlich der gesamte Strichcode zusammengesetzt. Zur Überprüfung, ob jeweils abgetastete Elemente tatsächlich Strichcodeelemente darstellen, werden gemäß dem Verfahren nach dieser Druckschrift jeweils die Breitenverhältnisse von aufeinanderfolgenden Balken und Abständen auf zulässige Breitenverhältnisse überprüft.

Es ist ein Ziel der vorliegenden Erfindung, ein verbessertes Verfahren und eine verbesserte Vorrichtung der eingangs genannten Art zu schaffen, mit welchen insbesondere auf einfache und kostengünstige Weise ein zumindest weitgehend fehlerfreies Erkennen des auf der Fläche angebrachten Codes gewährleistet ist.

Mit einem erfindungsgemäßen Verfahren wird diese Aufgabe dadurch gelöst, daß nur diejenigen High-Phasen und Low-Phasen als zulässige Codeelemente weiterverarbeitet werden, deren jeweilige zeitliche Längen innerhalb eines definierten Bereichs liegen,
daß zu direkt aufeinanderfolgenden High-Phasen und Low-Phasen gehörige zulässige Codeelemente jeweils zu Segmenten zusammengefaßt werden, daß nur diejenigen Segmente als zulässig weiterverarbeitet werden, die zumindest die vorgegebene Anzahl von Codeelementen aufweisen,
daß für den Fall, daß die Anzahl der Codeelemente eines zulässigen Segments die vorgegebene Anzahl übersteigt, die tatsächlich zu dem zu ermittelnden Strichcode gehörenden Codeelemente mittels einer im Segment enthaltenen Start-, Stop- und /oder Mittenmarkierung bestimmt werden, während für den Fall, daß die Anzahl der Codeelemente eines zulässigen Segments gleich der vorgegebenen Anzahl ist, das Segment als Strichcode erkannt wird,
und daß der ermittelte Strichcode decodiert wird.

Weiterhin wird diese Aufgabe durch eine Vorrichtung gemäß Anspruch 10 gelöst.

Durch die erfindungsgemäße Weiterverarbeitung nur derjenigen High-Phasen und Low-Phasen als zulässige Codeelemente, deren jeweilige zeitliche Länge innerhalb eines definierten Bereiches liegt, und das jeweilige Zusammenfassen zu direkt aufeinanderfolgenden High-Phasen und Low-Phasen gehöriger zulässiger Codeelemente zu Segmenten und die anschließende Weiterverarbeitung wiederum nur jener Segmente als zulässig, die zumindest die vorgegebene Anzahl von Codeelementen aufweisen, wird - anstelle einer Weißschulter - bekannte, in der Normierung des Codes festgelegte Information über den Code verwendet, um diesen von dem Umgebungsdruck sicher zu unterscheiden.

Damit wird berücksichtigt, daß zwar einzelne aufeinander folgende Umgebungsdruck-Felder gelegentlich mit einer geringen Wahrscheinlichkeit zufällig zwischen Hell und Dunkel mit einer Breite wechseln können, wie sie im Code vorgesehen ist, daß aber die Wahrscheinlichkeit einer mehrmaligen Wiederholung derartiger Hell-Dunkel-Übergänge direkt hintereinander insbesondere exponentiell zu der Anzahl der in der Codenorm vorgesehenen Codeelemente abfällt und damit für Codes mit gebräuchlichen jeweiligen zeitlichen Längen in der Praxis vernachlässigt werden kann.

Erfindungsgemäß können dabei die High-Phasen und Low-Phasen völlig unabhängig vom Erkennen einer Weißschulter in vorangehenden Codeelementen oder Umgebungsdruckelementen verarbeitet werden, so daß ein Code auch dann erkannt wird, wenn an ihn keine Weißschulter angrenzt.

Aufgrund der erfindungsgemäßen Auswertung der in der Normierung des Codes festgelegten Information über die zulässige Breite der Codeelemente und die zulässige Anzahl von Codeelementen pro Strichcode kann sogar dann eine korrekte Auswertung erfolgen, wenn der Umgebungsdruck selbst die Form eines Strichcodes aufweist, da der zu lesende Strichcode erfindungsgemäß aus dem Umgebungsdruck extrahiert werden kann.

Erfindungsgemäß kann bei der Verwendung eines Codes, bei dem für jedes Codeelement eine Anzahl von zulässigen Breiten vorgesehen ist, die Mindestlänge der High-Phasen und Low-Phasen der schmalsten zugelassenen Codeelementbreite und die Maximallänge der breitesten zugelassenen Codeelementbreite genau entsprechen.

Wenn im Code die vorgegebene Anzahl von Codeelementen gemeinsam eine vorbestimmte Summenbreite einnimmt, kann erfindungsgemäß vorgesehen sein, daß nur diejenigen Segmente als zulässig betrachtet werden, deren Gesamtbreite mindestens dieser vorgesehenen Summenbreite entspricht. Auf diese Weise wird nicht nur die bereits genannte, in der Codenorm enthaltene Information über das einzelne Codeelement zur Unterscheidung zwischen Umgebungsdruck und Strichcode herangezogen, sondern auch die vorbestimmte Gesamtbreite eines Strichcodes, was die Erkennung noch weiter verbessert.

Bei einer bevorzugten Ausführungsform der Erfindung weist der Strichcode mehrere Zeichen auf, die jeweils aus einer vorgegebenen Anzahl von Codeelementen bestehen. Ein Beispiel für einen derartigen Code ist die EAN-Codierung, bei der ein Zeichen jeweils aus vier Codeelementen (zwei Balken, zwei Lücken) besteht, wobei die Summenbreite der Codeelemente eines Zeichens dem Siebenfachen des dünnsten, im Rahmen des Codes wählbaren Codeelementes entspricht.

Die Zuverlässigkeit des erfindungsgemäßen Verfahrens kann in diesem Fall nun dadurch erhöht werden, daß nur solche Segmente als zulässig betrachtet werden, bei denen die bezüglich aller enthaltenen Zeichen ermittelten Summenbreiten jeweils dem genannten Wert entsprechen. Bei dieser Überprüfung ist es jedoch sinnvoll, nicht nur solche Segmente zuzulassen, bei denen die Summenbreite der enthaltenen Zeichen genau gleich dem vorgegebenen Wert ist, vielmehr empfiehlt es sich, für die zulässige Summenbreite einen Zulässigkeitsbereich vorzugeben, da die Summenbreite infolge von Druckungenauigkeiten, Schrägabtastungen oder variierenden Abständen der Codeelemente zum Scanner innerhalb einer gewissen Bandbreite schwanken kann.

Erfindungsgemäß kann weiterhin vorgesehen werden, daß die Codeelemente, von denen anhand der im Segment enthaltenen Start-Stop- und/oder Mittensignale festgestellt wird, daß sie tatsächlich zu dem zu lesenden Strichcode gehören, von den Segmenten als zulässige Strichcodes abgetrennt werden und die verbleibenden Restsegmente darauf untersucht werden, ob noch weitere zur Weiterverarbeitung zuzulassende Segmente darin enthalten sind. So kann sichergestellt werden, daß auch mehrere unmittelbar nebeneinander angeordnete Strichcodes auf einer abgetasten Fläche voneinander unterschieden und separat decodiert werden.

Vorteilhafte Ausführungen sind in den abhängigen Unteransprüchen angegeben.
Die Erfindung wird im folgenden nur beispielsweise anhand der Zeichnung beschrieben. In dieser zeigt:

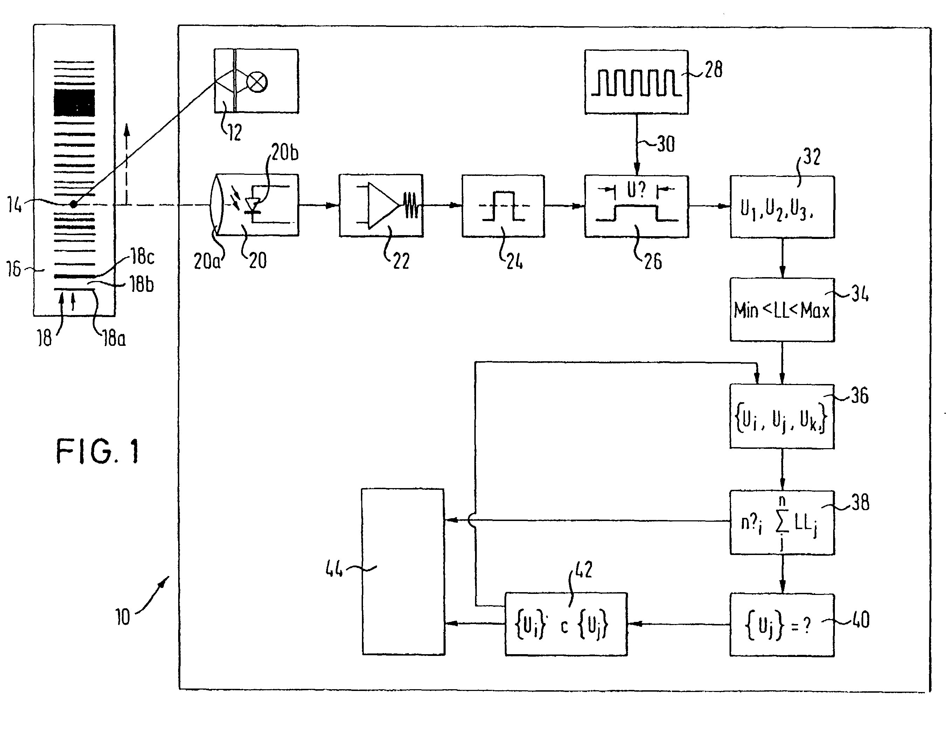

- Fig. 1: ein Blockdiagramm einer Vorrichtung zum Ausführen des erfindungsgemäßen Verfahrens.

Nach Fig. 1 umfaßt ein auf einer Fläche 16 angeordneter Code 18 helle und dunkle Felder 18a, 18b, 18c, die gemeinsam eine vorgegebene Anzahl aufeinanderfolgender Codeelemente bilden, wobei für jedes Codeelement eine Anzahl von zulässigen Breiten definiert ist und beispielsweise auch die Codeelemente eines Codes gemeinsam eine vorbestimmte Summenbreite einnehmen.

Dieser Code 18 wird mit einer Vorrichtung 10 abgetastet, die einen Lichtsender 12 umfaßt, der einen Lichtfleck 14 vorzugsweise periodisch nacheinander über den auf der Fläche 16 aufgebrachten Code 18 führt.

Die vom Lichtfleck 14 bestrahlten hellen und dunklen Felder 18a, 18b, 18c streuen Licht in einen Lichtempfänger 20 der Vorrichtung 10, wo sie z.B. über eine Linse 20a auf ein lichtempfindliches Element 20b fokussiert werden.

Der Lichtempfänger 20b gibt an seinem Ausgang ein der Intensität des empfangenen, rückgestreuten Lichtes entsprechendes elektrisches Analogsignal aus, das beispielsweise von einem Analogverstärker 22 verstärkt wird und dann zu einer Binärisierungsstufe 24 geleitet wird, deren Ausgang sich immer dann ändert, wenn das an ihrem Eingang anliegende Analogsignal eine einem Übergang zwischen einem hellen und einem dunklen Feld entsprechende Änderung der zum Empfänger zurückgestreuten Lichtintensität aufweist.

Die Binärisierungsstufe 24 kann beispielsweise durch einen Komparator gebildet sein, an dessen Ausgang ein High-Phasensignal erzeugt wird, wenn Licht von einem hellen Feld zurückgestreut wird, und an dessen Ausgang ein Low-Phasensignal ausgegeben wird, wenn Licht von einem dunklen Feld zurückgestreut wird. Dazu kann das verstärkte elektrische Analogsignal mit einer vorgegebenen Schwelle bewertet werden.

Der Ausgang der Binärisierungsstufe 24 wird mit einer Phasenlängen-Ermittlungsstufe 26 verbunden, die einen zweiten über eine Taktleitung 30 mit einem Taktgeber 28 verbundenen Eingang aufweist. Die Phasenlängen-Ermittlungsstufe zählt die Taktpulse, die zwischen zwei Pegeländerungen des Binärsignals auftreten, und gibt die ermittelten Taktzahlen als High-Low-Phasenlänge für ein helles oder dunkles Feld an einen Speicher 32, in welchem alle Phasenlängen eines Abtastvorgangs nacheinander abgelegt werden.

Die im Speicher 32 abgelegten aufeinanderfolgenden Phasenlängen werden an eine Breitenauswahlstufe 34 ausgegeben. In der Breitenauswahlstufe 34 wird für jede einzelne Phasenlänge zunächst geprüft, ob eine Phasenlänge in den vorgegebenen Bereich fällt, um so nur jene Binärsignalphasen als zulässige Codeelemente für die Weiterverarbeitung auszuwählen, deren Länge innerhalb dieses definierten Bereiches liegt. Hierzu wird in der Breitenauswahlstufe zuerst untersucht, ob die Phasenlänge wenigstens eine vorbestimmte Minimalgröße aufweist, die vorzugsweise der schmalsten im Code vorgesehenen Breite entspricht. Dann wird untersucht, ob die Phasenlänge auch kleiner als eine vorbestimmte Maximalgröße ist, die vorzugsweise der größten im Code vorgesehenen Breite entspricht.

Die Breitenauswahlstufe 34 gibt an ihrem Ausgang solange die aufeinanderfolgenden zulässigen Codeelemente der Reihe nach aus, bis eine Phasenlänge ermittelt wird, welche eine nicht in den vorgesehenen Bereich fallende Breite aufweist. Bei Auftreten einer derartigen Phasenlänge wird von der Breitenauswahlstufe ein Segmentiersignal an die Segmentierstufe 36 ausgegeben.

In der Segmentierstufe 36 werden anhand der von der Breitenauswahlstufe 34 erhaltenen Signale Segmente gebildet, die einer Abfolge von zulässigen Codeelementen entsprechen. Diese Segmente werden nacheinander von der Segmentierstufe 36 an eine Segmentauswahlstufe 38 weitergeleitet. In der Segmentauswahlstufe 38 wird die Anzahl von aufeinanderfolgenden Codeelementen in jedem der Segmente ermittelt und mit der im Code vorgegebenen Anzahl von Codeelementen verglichen. Nur jene Segmente, die wenigstens die vorgegebene Anzahl von Codeelementen umfassen, werden von der Segmentauswahlstufe 38 für die Weiterverarbeitung ausgewählt.

Zusätzlich kann in der Segmentauswahlstufe 38 für Strichcodes, in welchen alle Codeelemente gemeinsam eine vorbestimmte Summenbreite aufweisen, die Summenbreite aller in einem Segment enthaltenen Codeelemente bestimmt werden und mit der für den Strichcode vorgesehenen Summenbreite verglichen werden, um nur jene Segmente für die Weiterverarbeitung auszuwählen, deren Gesamtbreite wenigstens der im Code vorgesehenen Summenbreite entspricht.

Wenn die Anzahl der Codeelemente eines Segmentes der vorgegebenen Anzahl genau entspricht und/oder wenn die Summenbreite der vorgesehenen Gesamtbreite entspricht, wird das entsprechende Segment direkt einer Decodierstufe 44 zugeführt, welche das Segment auch ohne vorherige Detektion der Weißschulter sofort decodieren kann, wozu ein beliebiges bekanntes Verfahren verwendet werden kann.

Wenn die Anzahl der im Segment vorliegenden Codeelemente dagegen größer als die vorgegebene Anzahl ist und/oder die Summenbreite des Segmentes die vorgesehene Codeelement-Summenbreite überschreitet, wird das entsprechende Segment an eine Musteridentifizierungsstufe 40 ausgegeben, in welcher nach einem vorbekannten Muster gesucht wird. Dabei kann beispielsweise vorgesehen werden, daß als bekanntes Muster, nach welchem gesucht wird, ein Start- oder Stopzeichen oder eine evtl. vorhandene Weißschulter gewählt wird. Weiter kann gegebenenfalls nach einem Mittenzeichen gesucht werden, etwa wenn es sich um die Codeart EAN/UPC handelt.

Bei Identifizierung eines derartigen, vorbekannten Musters wird dessen Position im Segment zusammen mit dem Segment an eine Gruppierstufe 42 ausgegeben, welche ausgehend von der Position des identifizierten Musters aus dem Segment eine Gruppe von zum jeweiligen Strichcode gehörigen, aufeinanderfolgenden Codeelemente isoliert, die dann zur Decodierung an die Decodierstufe 44 weitergeleitet werden. Das verbleibende Restsegment kann gegebenenfalls zurück an die Segmentauswahlstufe 38 geleitet werden, um das Restsegment darauf zu untersuchen, ob noch weitere codierte Information enthalten ist.

Die vorliegende Erfindung ermöglicht es somit, einen Code sicher vom Umgebungsdruck zu unterscheiden, ohne daß die im Stand der Technik notwendige Identifizierung der Weißschulter zwingend erforderlich ist. Die zur Implementierung der Vorrichtung erforderlichen Schaltungen sind dabei sehr einfach aufgebaut.

## Patentansprüche

1. Verfahren zum Lesen eines aus einer vorgegebenen Anzahl von Codeelementen (18a, 18b, 18c) bestehenden Strichcodes (18), bei dem ein die Codeelemente (18a, 18b, 18c) abtastender Strichcodeleser ein binäres Signal mit aufeinanderfolgenden High-Phasen und Low-Phasen erzeugt, deren jeweilige zeitliche Längen den Breiten der aufeinanderfolgenden abgetasteten Codeelemente (18a, 18b, 18c) entsprechen,
**dadurch gekennzeichnet,**
**daß** nur diejenigen High-Phasen und Low-Phasen als zulässige Codeelemente (18a, 18b, 18c) weiterverarbeitet werden, deren jeweilige zeitliche Längen innerhalb eines definierten Bereichs liegen,
**daß** zu direkt aufeinanderfolgenden High-Phasen und Low-Phasen gehörige zulässige Codeelemente (18a, 18b, 18c) jeweils zu Segmenten zusammengefaßt werden,
**daß** nur diejenigen Segmente als zulässig weiterverarbeitet werden, die zumindest die vorgegebene Anzahl von Codeelementen (18a, 18b, 18c) aufweisen,
**daß** für den Fall, daß die Anzahl der Codeelemente (18a, 18b, 18c) eines zulässigen Segments die vorgegebene Anzahl übersteigt, die tatsächlich zu dem zu ermittelnden Strichcode (18) gehörenden Codeelemente (18a, 18b, 18c) mittels einer im Segment enthaltenen Start-, Stop- und /oder Mittenmarkierung bestimmt werden, während für den Fall, daß die Anzahl der Codeelemente (18a, 18b, 18c) eines zulässigen Segments gleich der vorgegebenen Anzahl ist, das Segment als Strichcode (18) erkannt wird,
und **daß** der ermittelte Strichcode (18) decodiert wird.

2. Verfahren nach Anspruch 1,
**dadurch gekennzeichnet, daß** die High-Phasen und Low-Phasen unabhängig vom Erkennen einer Weißschulter in vorangehenden Codeelementen (18a, 18b, 18c) oder in der Umgebung des Strichcodes (18) verarbeitet werden.

3. Verfahren nach einem der vorhergehenden Ansprüche,
**dadurch gekennzeichnet, daß**
die jeweiligen zeitlichen Längen der High-Phasen und Low-Phasen durch Zählen von Taktpulsen bestimmt werden.

4. Verfahren nach einem der vorhergehenden Ansprüche,
**dadurch gekennzeichnet, daß** für
jedes Codeelement (18a, 18b, 18c) eine Anzahl von zulässigen Breiten definiert ist.

5. Verfahren nach Anspruch 4,
**dadurch gekennzeichnet, daß**
die jeweilige zeitliche Mindestlänge der High-Phasen und Low-Phasen der schmalsten zugelassenen Codeelementbreite genau entspricht.

6. Verfahren nach Anspruch 4 oder 5,
**dadurch gekennzeichnet, daß**
die jeweilige zeitliche Höchstlänge der High-Phasen und Low-Phasen der breitesten zugelassenen Codeelementbreite genau entspricht.

7. Verfahren nach einem der vorhergehenden Ansprüche,
**dadurch gekennzeichnet, daß**
die vorgegebene Anzahl von Codeelementen (18a, 18b, 18c) gemeinsam eine vorbestimmte Summenbreite einnimmt und nur diejenigen Segmente als zulässig betrachtet werden, deren Gesamtbreite mindestens dieser vorgesehenen Summenbreite entspricht.

8. Verfahren nach einem der vorhergehenden Ansprüche,
**dadurch gekennzeichnet, daß**
der Strichcode (18) mehrere Zeichen aufweist, die jeweils aus einer vorgegebenen Anzahl von Codeelementen (18a, 18b, 18c) bestehen, wobei die Codeelemente (18a, 18b, 18c) jedes Zeichens eine vorbestimmte Summenbreite einnehmen, und daß nur solche Segmente als zulässig betrachtet werden, bei denen die bezüglich
aller enthaltenen Zeichen ermittelten Summenbreiten jeweils innerhalb eines vorgegebenen Bereichs liegen.

9. Verfahren nach einem der vorhergehenden Ansprüche,
**dadurch gekennzeichnet, daß**
die Codeelemente (18a, 18b, 18c), von denen anhand der im Segment enthaltenen Start- Stop- und/ oder Mittensignale festgestellt wird, daß sie tatsächlich zu dem zu lesenden Strichcode (18) gehören, von den Segmenten abgetrennt werden und die verbleibenden Restsegmente darauf untersucht werden, ob noch zur Weiterverarbeitung zuzulassende Segmente darin enthalten sind.

10. Vorrichtung zum Lesen eines aus einer vorgegebenen Anzahl von Codeelementen (18a, 18b, 18c) bestehenden Strichcodes (18) mit einer Strichcodeabtasteinheit (10) zum Abtasten aufeinanderfolgender Codeelemente und Ausgeben eines Abtastsignals und einer daraus ein Binärsignal mit aufeinanderfolgenden High-Phasen und Low-Phasen herleitenden Binärisierungsstufe (24), wobei die jeweiligen zeitlichen Längen der High-Phasen und Low-Phasen den Breiten der aufeinanderfolgenden abgetasteten Codeelemente (18a, 18b, 18c) entsprechen,
**gekennzeichnet durch**
eine Breitenauswahlstufe (34) zur Auswahl nur jener Binärsignalphasen als zulässige Codeelemente (18a, 18b, 18c) für die Weiterverarbeitung, deren jeweilige zeitliche Längen innerhalb eines definierten Bereiches liegen,
eine dieser nachgeschalteten Segmentierstufe (36) zum Zusammenfassen von zulässigen Codeelementen (18a, 18b, 18c), die zu direkt aufeinanderfolgenden Binärsignalphasen gehören, zu Segmenten und
eine Segmentauswahlstufe (38) zur Auswahl für die Decodierung nur jener Segmente, welche genau die vorgegebene Anzahl von Codeelementen (18a, 18b, 18c) oder mehr als die vorgegebene Anzahl von Codeelementen (18a, 18b, 18c) aufweisen, und zum Verwerfen all jener Segmente, die weniger als die vorgegebene Anzahl von Codeelementen (18a, 18b, 18c) aufweisen, insbesondere **durch** eine der Segmentauswahlstufe (38) nachgeschaltete Mustererkennungsstufe (40), die dazu ausgelegt ist, für den Fall, daß die Anzahl der Codeelemente (18a, 18b, 18c) eines zulässigen Segments die vorgegebene Anzahl übersteigt, die tatsächlich zu dem zu ermittelnden Strichcode (18) gehörenden Codeelemente (18a, 18b, 18c) mittels einer im Segment enthaltenen Start-, Stop- und/ oder Mittenmarkierung zu bestimmen, während für den Fall, daß die Anzahl der Codeelemente (18a, 18b, 18c) eines zulässigen Segments gleich der vorgegebenen Anzahl ist, das Segment direkt einer Decodierstrufe (44) zuführbar ist.

## Claims

1. Method of reading a bar code (18) comprising a predetermined number of code elements (18a, 18b, 18c) in which a bar code reader which scans the code elements (18a, 18b, 18c) generates a binary signal with sequential high phases and low phases, the respective time lengths of which correspond to the widths of the sequentially scanned code elements (18a, 18b, 18c), **characterised in that** only those high phases and low phases whose time length lies within a defined range are further processed as permissible code elements (18a, 18b, 18c); **in that** permissible code elements belonging to directly sequential high phases and low phases are respectively grouped together into segments; **in that** only those segments are further processed as permissible which have at least the predetermined number of code elements (18a, 18b, 18c); **in that**, in the event that the number of code elements (18a, 18b, 18c) of a permissible segment exceeds the predetermined number, the code elements (18a, 18b, 18c) which actually belong to the bar code (18) to be determined are specified by means of a start marking, a stop marking and/or a centre marking contained in the segment, whereas in the event that the number of code elements (18a, 18b, 18c) of a permissible segment is the same as the predetermined number, the segment is recognized as a bar code (18); and **in that** the bar code (18) which is found is decoded.

2. Method in accordance with claim 1, **characterised in that** the high phases and low phases are processed independently of the recognition of a white shoulder in the preceding code elements (18a, 18b, 18c) or in the area of the bar code (18).

3. Method in accordance with any one of the preceding claims, **characterised in that** the time lengths of the high phases and of the low phases are determined by the counting of clock pulses.

4. Method in accordance with any one of the preceding claims, **characterised in that** a number of permissible widths is defined for each code element (18a, 18b, 18c).

5. Method in accordance with claim 4, **characterised in that** the minimum respective time length of the high phases and of the low phases corresponds precisely to the narrowest permissible code element width.

6. Method in accordance with claim 4 or claim 5, **characterised in that** the maximum respective time length of the high phases and of the low phases corresponds precisely to the broadest permissible code element width.

7. Method in accordance with any one of the preceding claims, **characterised in that** the predetermined number of code elements (18a, 18b, 18c) jointly adopt a predetermined summed width and only those segments are considered as permissible whose total width corresponds at least to this envisaged summed width.

8. Method in accordance with any one of the preceding claims, **characterised in that** the bar code (18) has a plurality of signs which respectively consist of a predetermined number of code elements (18a, 18b, 18c), with the code elements (18a, 18b, 18c) of each sign adopting a predetermined summed width; and **in that** only such segments are considered as permissible in which the summed widths obtained with respect to all the signs contained respectively lie within a predetermined range.

9. Method in accordance with any one of the preceding claims, **characterised in that** the code elements (18a, 18b, 18c) for which a determination is made with reference to the start signals, stop signals and/or centre signals contained in the segment, that they actually belong to the bar code (18) to be read, are separated from the segments and the remaining residual segments are investigated to see whether segments which can be allowed for further processing are contained therein.

10. Apparatus for reading a bar code (18) consisting of a predetermined number of code elements (18a, 18b, 18c) comprising a bar code sensing unit (10) for sensing sequential code elements, and for transmitting a sensing signal, and a processing stage (24) for forming from the sensing signal a binary signal having sequential high phases and low phases, wherein the respective time lengths of the high phases and the low phases correspond to the widths of the sequentially sensed code elements (18a, 18b, 18c), **characterised by** a width selection stage (34) for selecting only those binary signal phases whose respective time length lies within a defined range as permissible code elements (18a, 18b, 18c) for further processing, by a segmenting stage (36) connected after the width selection stage for combining permissible code elements (18a, 18b, 18c) which belong to directly sequential binary signal phases into segments, and by a segment selection stage (38) for selecting only those segments for decoding which have exactly the predetermined number of code elements (18a, 18b, 18c) or more than the predetermined number of code elements (18a, 18b, 18c) and for rejecting all those segments which have less than the predetermined number of code elements (18a, 18b, 18c), in particular by a pattern recognition stage (40) connected after the segment selection stage (38), with the pattern recognition stage (40) being designed to determine the code elements (18a, 18b, 18c) which actually belong to the bar code (18) to be determined by means of a start marking, a stop marking and/or a centre marking contained in the segment in the event that the number of code elements (18a, 18b, 18c) of a permissible segment exceeds the predetermined number, whereas in the event that the number of code elements (18a, 18b, 18c) of a permissible segment is the same as the predetermined number, the segment can be directly supplied to a decoding stage (44).

## Revendications

1. Procédé pour la lecture d'un code-barres (18) constitué d'un nombre prédéterminé d'éléments de code (18a, 18b, 18c), dans lequel un lecteur de code-barres balayant les éléments de code (18a, 18b, 18c) génère un signal binaire avec des phases hautes et des phases basses successives, dont les longueurs de temps respectives correspondent aux largeurs des éléments de code (18a, 18b, 18c) balayés successivement,
**caractérisé en ce que**
seules les phases hautes et les phases basses dont les longueurs de temps respectives sont situées à l'intérieur d'une plage définie sont traitées ultérieurement en tant qu'éléments de code (18a, 18b, 18c) autorisés,
des éléments de code (18a, 18b, 18c) autorisés faisant partie de phases hautes et de phases basses directement successives sont respectivement regroupés en segments,
seuls sont traités ultérieurement comme autorisés les segments qui comportent au moins le nombre prédéterminé d'éléments de code (18a, 18b, 18c),
dans le cas où le nombre d'éléments de code (18a, 18b, 18c) d'un segment autorisé dépasse le nombre prédéterminé, les éléments de code (18a, 18b, 18c) faisant effectivement partie du code-barres (18) à détecter sont définis au moyen d'un marquage de départ, d'arrêt et/ou de centrage contenu dans le segment,
alors que, dans le cas où le nombre d'éléments de code (18a, 18b, 18c) d'un segment autorisé est égal au nombre prédéterminé, le segment est identifié en tant que code-barres (18), et
le code-barres (18) détecté est décodé.

2. Procédé selon la revendication 1,
**caractérisé en ce que** les phases hautes et les phases basses sont traitées indépendamment de l'identification d'une zone blanche dans des éléments de code (18a, 18b, 18c) précédents ou dans l'environnement du code-barres (18).

3. Procédé selon l'une des revendications précédentes,
**caractérisé en ce que** les longueurs de temps respectives des phases hautes et des phases basses sont définies par le comptage d'impulsions de synchronisation.

4. Procédé selon l'une des revendications précédentes,
**caractérisé en ce que** chaque élément de code (18a, 18b, 18c) définit un nombre de largeurs autorisées.

5. Procédé selon la revendication 4,
**caractérisé en ce que** la longueur de temps minimale de chacune des phases hautes et des phases basses correspond exactement à la largeur la plus étroite autorisée d'un élément de code.

6. Procédé selon la revendication 4 ou 5,
**caractérisé en ce que** la longueur de temps maximale de chacune des phases hautes et des phases basses correspond exactement à la largeur la plus large autorisée d'un élément de code.

7. Procédé selon l'une quelconque des revendications précédentes,
**caractérisé en ce que** le nombre prédéterminé d'éléments de code (18a, 18b, 18c) occupe en commun une largeur cumulée prédéfinie, et **en ce que** seuls sont considérés comme autorisés les segments dont la largeur totale correspond au moins à cette largeur cumulée prévue.

8. Procédé selon l'une quelconque des revendications précédentes,
**caractérisé en ce que** le code-barres (18) comporte plusieurs symboles, qui sont respectivement constitués d'un nombre prédéterminé d'éléments de code (18a, 18b, 18c), les éléments de code (18a, 18b, 18c) de chaque symbole occupant une largeur cumulée prédéfinie, et **en ce que** seuls sont considérés comme autorisés les segments dans lesquels les largeurs cumulées détectées relatives à tous les symboles contenus se situent respectivement à l'intérieur d'une plage prédéterminée.

9. Procédé selon l'une quelconque des revendications précédentes,
**caractérisé en ce que** les éléments de code (18a, 18b, 18c) qui, à l'aide des signaux de départ, d'arrêt et/ou de centrage contenus dans le segment, sont détectés comme faisant effectivement partie du code-barres (18) à lire, sont séparés des segments, et **en ce qu'**il est ensuite vérifié si les segments restants contiennent encore des segments devant être autorisés pour le traitement ultérieur.

10. Dispositif pour la lecture d'un code-barres (18) constitué d'un nombre prédéterminé d'éléments de code (18a, 18b, 18c), comportant une unité de balayage (10) de code-barres destinée au balayage d'éléments de code successifs et à l'émission d'un signal de balayage, et un étage de numérisation binaire (24) dérivant de ce dernier un signal binaire avec des phases hautes et des phases basses successives, les longueurs de temps respectives des phases hautes et des phases basses correspondant aux largeurs des éléments de code (18a, 18b, 18c) balayés successivement,
**caractérisé par**
un étage de sélection de largeurs (34) destiné à ne sélectionner, en tant qu'éléments de code (18a, 18b, 18c) autorisés au traitement ultérieur, que les phases du signal binaire dont les longueurs de temps respectives sont situées à l'intérieur d'une plage définie,
un étage de segmentation (36) disposé en aval de celui-ci et destiné au regroupement en segments d'éléments de code (18a, 18b, 18c) autorisés, qui font partie de phases directement successives du signal binaire, et
un étage de sélection de segments (38) destiné à ne sélectionner pour le décodage que les segments comportant exactement le nombre prédéterminé d'éléments de code (18a, 18b, 18c), ou plus que le nombre prédéterminé d'éléments de code (18a, 18b, 18c), et à rejeter tous les segments comportant moins que le nombre prédéterminé d'éléments de code (18a, 18b, 18c), notamment par un étage d'identification de modèles (40) disposé en aval de l'étage de sélection de segments (38) et qui, dans le cas où le nombre d'éléments de code (18a, 18b, 18c) d'un segment autorisé dépasse le nombre prédéterminé, est conçu pour définir les éléments de code (18a, 18b, 18c) faisant effectivement partie du code-barres (18) détecté au moyen d'un marquage de départ, d'arrêt et/ou de centrage contenu dans le segment, alors que, dans le cas où le nombre d'éléments de code (18a, 18b, 18c) d'un segment autorisé est égal au nombre prédéterminé, le segment peut être envoyé directement à un étage de décodage (44).
